# EUROPEAN PATENT SPECIFICATION

(11) **EP 0 900 120 B1**
(45) Date of publication and mention of the grant of the patent: **23.07.2003**
(21) Application number: 97918173.2
(22) Date of filing: 29.04.1997
(51) Int. Cl.: B01D 46/52, B01D 29/62

(54) **CLEANING DEVICE FOR FILTER OF DUST FILTER DEVICE**
REINIGUNGSAPPARATUR FÜR DEN FILTER VON STAUBFILTERVORRICHTUNGEN
DISPOSITIF DE NETTOYAGE POUR LE FILTRE DE DISPOSITIFS A FILTRE A POUSSIERES

(30) Priority: 02.05.1996 FI 961873
(43) Date of publication of application: 10.03.1999
(73) Proprietor: Vanhala, Markku, 48100 kotka (FI)
(72) Inventor: Vanhala, Markku, 48100 kotka (FI)
(74) Representative: Valkeiskangas, Tapio Lassi Paavali
(86) International application number: FI9700262
(87) International publication number: WO97041945

(56) References cited:
- EP-A- 0 169 330
- GB-A- 2 280 388
- US-A- 3 898 414
- US-A- 5 106 488

## Description

The invention relates to a cleaning device for a filter of a dust filter device, the cleaning device comprising means for feeding air through the filter to a direction opposite to the normal air flow direction.

Different cleaning devices and methods are well known particularly in connection with different dust filter devices. Apparatuses in which dust filter devices are used include, for example, different aspirators, particularly industrial aspirators, ventilation systems, etc.

Previously known in the field are, for example, systems in which an air flow that cleans the filter is generated by the motor of an aspirator. Examples for such systems include, for example, the solutions presented in DE-C-595,686 and DE-C-666,446.

A drawback of the above solutions is that they are inefficient and complicated. In some applications, the filter element also has to be detached and then attached to the blow side of the aspirator. A problem here is that the action is laborious to carry out and that impurities spread to the environment.

Another previously known basic solution is to detach the filter to be cleaned from the aspirator and to clean it, for example, by compressed air. A drawback of the solution is that it is laborious to perform and that impurities spread to the environment. The cleaning result is also fully dependent on how careful the person doing the cleaning is.

To eliminate the above drawbacks, a solution has been developed in which a compressed-air device is placed inside the aspirator and arranged to direct a compressed-air jet to the filter in a direction opposite to the normal air flow direction in a desired manner so as to clean every part of the filter. A solution like this is known from FI-B-78,388.

In most conditions the above solution is quite satisfactory, but in some situations problems arise. Problems arise, for example, when the filter is overloaded or the dust consists of fibrous particles.

When the filter is overloaded, the dust packs tightly between the lamellas of the filter, pressing them tightly against one another. The gaps on the inner surface of the filter close, and so the pressure impact from inside the filter cannot penetrate between the lamellas of the filter and the dust cannot be detached.

When the dust is light and porous, it remains between the lamellas in the suction step, forming a continuous felt-like mat. During the cleaning, a pressure impact penetrates between the lamellas, cleaning their upper ends. The dust then wedges between the lamellas and air flows out through the porous dust; the fibrous material, however, does not become detached.

EP-A-0 169 330, US-A-5 106 488 and US-A-3 898 414 disclose rotating cleaning devices, which engage externally a pleased filter to dislodge accumulated particles.

The object of the invention is to provide a cleaning device by which the drawbacks of the prior art can be eliminated. This is achieved with a cleaning device according to the invention, which is characterized by further cleaning means comprising a frame element that is arranged, in use, outside the filter to move in relation to the filter and is provided with cam elements and nozzles, the cam elements being arranged to open the gaps between lamellas of the filter in response to a movement of the frame element, and the nozzles being arranged to direct an air jet parallel to the normal air flow between the lamellas opened by the cam elements and to remove the dust from between the lamellas.

The major advantage of the invention is its efficiency: the filter can be cleaned efficiently and quickly under all conditions. A further advantage of the invention is its simplicity, on account of which the introduction and use the invention are cost-effective. A feature contributing to the cost-effectiveness of the introduction is that the invention can also be applied in connection with aspirators currently used.

In the following the invention will be described in greater detail with reference to a preferred embodiment illustrated in the attached drawing, in which
fig. 1 shows a general view of a cleaning device of the prior art,
fig. 2 shows a general view of a cleaning device according to the invention as applied in the solution illustrated in fig. 1,
fig. 3 shows a detail of fig. 2 in the direction of arrow A, and
fig. 4 shows a general side view of a cleaning device according to the invention in a dust filter device.

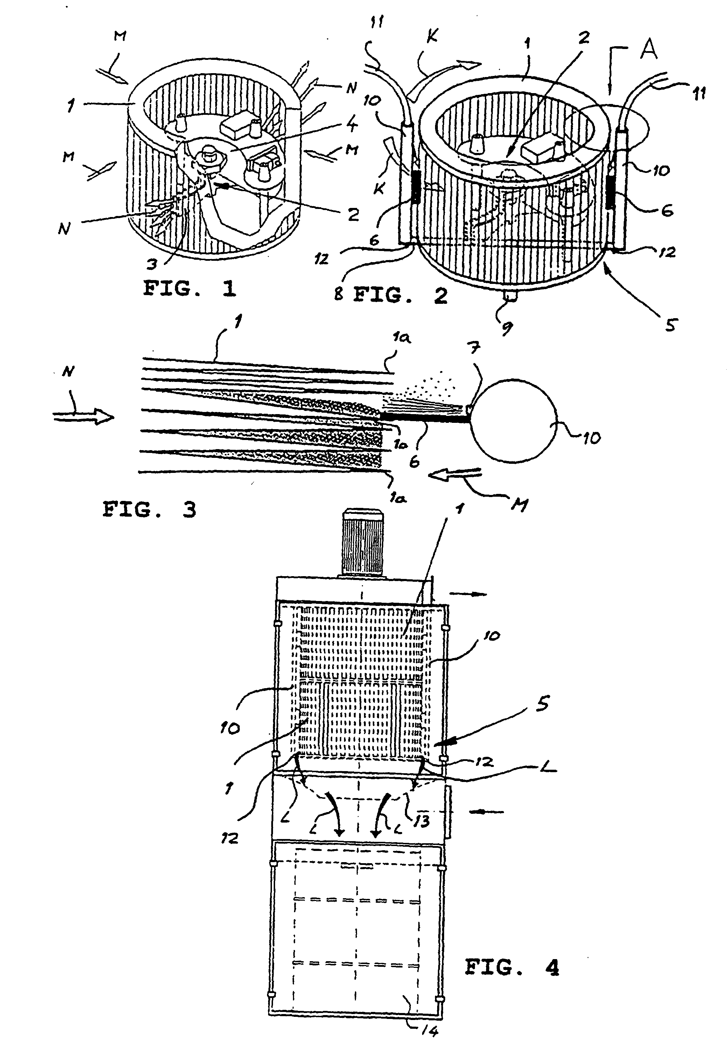

Fig. 1 shows a general view of a previously known cleaning device for a filter of a dust filter device. The figure shows a filter 1 and means 2 for feeding air through the filter 1 in a direction opposite to the normal air flow direction. The means 2 comprise, for example, a nozzle element 3 and a compressed-air container 4. The nozzle element 3 is arranged to direct an impact of compressed-air to the inner surface of the filter 1 in the desired manner, as shown by arrows N in fig. 1. The normal air flow direction is indicated by arrows M in fig. 1. The nozzle element 3 is rotated by the impact of the air flow. The structure shown in fig. 1 can be found, for example, in an industrial aspirator, a welding gas aspirator, or in some other such apparatus or system.

A person skilled in the art will regard the solution of fig. 1 as conventional technology, so the operation and structure of the solution are not be discussed in greater detail herein. Reference is here made to the above-mentioned Finnish Patent 78,388, which describes the principle of the solution illustrated in fig. 1.

Figs. 2-4 show a general view of a preferred embodiment of a cleaning device according to the invention, applied to the basic structure shown in fig. 1. In figs. 2-4, like reference numbers indicate correspondingly as in fig. 1. Fig. 3 shows an enlarged view of a detail of fig. 2 in the direction of arrow A.

According to an essential idea of the invention, the cleaning device comprises a frame element 5 arranged outside the filter 1 to move in relation to the filter. The frame element 5 is provided with cam elements 6 and nozzles 7. The cam elements 6 are arranged to be in contact with the outer surface of the filter 1 and to open the gaps between the lamellas 1a of the filter 1 in response to a movement of the frame element 5. The nozzles 7 are also arranged to direct an air jet parallel to the normal air flow M between the lamellas 1a opened by the cam elements 6 and to remove the dust from between the lamellas 1a.

The frame can comprise, for example, a crossbar 8 rotatably attached to a shaft 9 arranged at and parallel to the symmetry axis of the filter 1. The rotational movement of the frame element 5 is indicated in the figure by arrows K. The cam elements 6 are attached to the frame element by means of feed rods 10. In the example illustrated by the figures, the feed rods 10 are placed in an upright position and attached to the crossbar 8 at their lower ends. The cam elements 6 are attached to the feed rods 10 and arranged essentially radially with respect to them, as shown in fig. 3. In the feed rods 10, at least one nozzle 7 is arranged adjacent to the cam element 6. In the example illustrated by the figures, air hoses 11 are connected to the upper ends of the feed rods. Air is blown through the air hoses into the feed rods and further through the nozzles 7 to the filter 1 in the manner shown in fig. 3.

The cleaning device illustrated by the figures operates, in principle, in the following manner. The frame element 5 makes a reciprocating movement of 180° about the shaft 9. The rotational power for the frame element 5 is generated manually, by a motor, a cylinder or some other suitable source of power. The cam elements 6 arranged in the feed rods 10 open the gaps between the lamellas 1a of the filter 1, and the compressed air flowing from the nozzle 7 removes any coarse dust present therein. The operation is described in detail in fig. 3. Any particulate dust is discharged from the filter 1 by the means 2 arranged inside the filter 1. The cleaning apparatus thus comprises two mutually independent cleaning systems, one of which is for coarse dust and the other for particulate dust.

The frame element 5 can also be provided with additional arrangements to improve the cleaning result. For example, at least one additional nozzle 12 arranged to clean a conical element 13 below the filter 11 and connected to the aspirator can be placed at the lower ends of the feed rods 10. This makes it possible to rinse the so-called shell cone 13, which is essential to the cleaning. The rinsing by an air jet through the additional nozzles 12 makes it possible to discharge any dust remaining on top of the cone 13 to a recovery vessel 14 of the aspirator. The positions of the additional nozzles appear particularly clearly from fig. 2. Fig. 4 shows it generally by means of arrows L indicating the air flow how the cone 13 can be rinsed by the additional nozzles 12. The additional nozzles can also be arranged to operate simultaneously in the same way as nozzle 7 and also to direct an air jet or part of an air jet to the cone 13.

The above embodiments are not intended to restrict the invention in any way, but the invention can be modified quite freely within the scope of the claims. It is thus to be understood that a cleaning device of the invention or any details thereof need not necessarily be exactly as shown in the figures, but that other kinds of solutions are also possible. For example, the invention is not restricted to be used in connection with a single filter, but a plural number of filters can also be cleaned with the device. Fig. 4 illustrates an application in which a cleaning device is arranged to clean two filters placed on top of each other. It is also possible to arrange a plural number of cam elements and nozzles in a feed rod, which is advantageous in high filter constructions. Furthermore, the invention is not limited to be used in connection with a particular apparatus, such as an industrial aspirator, but it can be used in connection with any dust filter apparatus whatsoever.

## Claims

1. A cleaning device for a filter of a dust filter device, the device comprising means (2) for feeding air, in use, through the filter (1) to a direction (N) opposite to the normal air flow direction (M), **characterized by** further cleaning means comprising a frame element (5) that is arranged, in use, outside the filter (1) to move in relation to the filter and is provided with cam elements (6) and nozzles (7, 12), the cam elements (6) being arranged to open the gaps between lamellas (1a) of the filter (1) in response to a movement of the frame element (5), and the nozzles (7, 12) being arranged to direct an air jet parallel to the normal air flow (M) between the lamellas (1a) opened by the cam elements (6) and to remove the dust from between the lamellas (1a).

2. A cleaning device according to claim 1, **characterized in that** the frame element (5) is rotatably attached to a shaft (9) arranged at and parallel to the symmetry axis of the filter (1).

3. A cleaning device according to claim 2, **characterized in that** the frame element (5) is arranged to make a reciprocating movement of 180°.

4. A cleaning device according to claim 1, 2 or 3, **characterized in that** the cam elements (6) are attached to feed rods (10) arranged in the frame element (5), and in the feed rods are arranged nozzles (7, 12).

5. A cleaning device according to claim 4, **characterized in that** the feed rods (10) are essentially parallel to the symmetry axis of the filter (1).

6. A cleaning device according to claim 4 or 5, **characterized in that** at least one additional nozzle (12) is arranged at the lower ends of the feed rods, and an air jet or part thereof that is discharged from the nozzle is arranged, in use, to clean a cone element (13) below the filter (1).

## Patentansprüche

1. Reinigungsvorrichtung für einen Filter einer Staubfiltervorrichtung, wobei die Vorrichtung eine Einrichtung (2) umfasst, die in Funktion Luft durch den Filter (1) in eine Richtung (N) entgegengesetzt zu der normalen Luftstromrichtung (M) leitet, **gekennzeichnet durch** eine weitere Reinigungseinrichtung, die ein Rahmenelement (5) umfasst, das in Funktion außerhalb des Filters (1) angeordnet ist, um sich in Bezug auf den Filter zu bewegen, und mit Kurvenelementen (6) und Düsen (7, 12) versehen ist, wobei die Kurvenelemente (6) so eingerichtet sind, dass sie die Zwischenräume zwischen Lamellen (1a) des Filters (1) in Reaktion auf eine Bewegung des Rahmenelementes (5) öffnen, und die Düsen (7, 12) so eingerichtet sind, dass sie einen Luftstrahl parallel zu dem normalen Luftstrom (M) zwischen die Lamellen (1a) leiten, die **durch** die Kurvenelemente (6) geöffnet werden, und den Staub zwischen den Lamellen (1a) entfernen.

2. Reinigungsvorrichtung nach Anspruch 1, **dadurch gekennzeichnet, dass** das Rahmenelement (5) drehbar an einer Welle (9) angebracht ist, die an der Symmetrieachse des Filters (1) und parallel dazu angeordnet ist

3. Reinigungsvorrichtung nach Anspruch 2, **dadurch gekennzeichnet, dass** das Rahmenelement (5) so eingerichtet ist, dass es eine Hin- und Herbewegung von 180° ausführt.

4. Reinigungsvorrichtung nach Anspruch 1, 2 oder 3, **dadurch gekennzeichnet, dass** die Kurvenelemente (6) an Vorschubwellen (10) angebracht sind, die in dem Rahmenelement (5) angeordnet sind, und in den Vorschubwellen Düsen (7, 12) angeordnet sind.

5. Reinigungsvorrichtung nach Anspruch 4, **dadurch gekennzeichnet, dass** die Vorschubwellen (10) im Wesentlichen parallel zur Symmetrieachse des Filters (1) sind.

6. Reinigungsvorrichtung nach Anspruch 4 oder 5, **dadurch gekennzeichnet, dass** wenigstens eine zusätzliche Düse (12) an den unteren Enden der Vorschubwellen angeordnet ist und ein Luftstrahl oder ein Detail desselben, der aus der Düse ausgestoßen wird, so eingerichtet ist, dass er in Funktion ein Trichterelement (13) unter dem Filter (1) reinigt.

## Revendications

1. Dispositif de nettoyage pour un filtre de dispositif à filtre à poussières, le dispositif comportant un moyen (2) pour alimenter de l'air en serviceé à travers le filtre (1) dans le sens (N) opposé au sens de flux d'air normal (M), **caractérisé en ce qu'**un outre moyen de nettoyage comporte un élément de cadre (5) disposé, en service, à l'extérieur du filtre (1) de façon mobile par rapport du filtre et muni des éléments à cames (6) et des buses (7, 12), les éléments à cames étant disposés à ouvrir les interstices entre des lamelles (1a) du filtre (1) en réponse au mouvement de l'élément de cadre (5) et les buses (7, 12) étant disposées à diriger un jet d'air parallèle au sens de flux d'air normal (M) entre les lamelles (1a) ouvertes par les éléments à cames (6) et à enlever la poussière entre les lamelles (1a).

2. Dispositif de nettoyage selon la revendication 1, **caractérisé en ce que** l'élément de cadre (5) est attaché d'une manière rotative à un essieu (9) disposé en parallèle avec l'axe de symétrie du filtre (1).

3. Dispositif de nettoyage selon la revendication 2, **caractérisé en ce que** l'élément de cadre (5) est disposé à faire un mouvement de va et vient de 180 degrés.

4. Dispositif de nettoyage selon la revendication 1, 2 ou 3, **caractérisé en ce que** les éléments à cames (6) sont attachés à des conduites de souffle (10) disposées dans l'élément de cadre (5) et les buses (7, 12) sont disposées dans les conduites de souffle.

5. Dispositif de nettoyage selon la revendication 4, **caractérisé en ce que** les conduites de souffle (10) sont sensiblement parallèles à l'axe de symétrie du filtre (1).

6. Dispositif de nettoyage selon la revendication 4 ou 5, **caractérisé en ce qu'**au moins une buse additionnelle (12) est disposée aux bouts inférieurs des conduites de souffle et un jet d'air, ou une partie de celui-ci, déchargeant par la buse est disposé à nettoyer en service un élément conique (13) sous le filtre (1).
